(19) Europäisches Patentamt

European Patent Office

Office européen des brevets

(11) Numéro de publication: **0 271 416**

**A1**

(12) **DEMANDE DE BREVET EUROPEEN**

(21) Numéro de dépôt: 87420310.2

(22) Date de dépôt: 18.11.87

(51) Int. Cl.⁴: **F 16 H 57/08**

(30) Priorité: 18.11.86 FR 8616423

(43) Date de publication de la demande:
15.06.88 Bulletin 88/24

(84) Etats contractants désignés:
AT BE CH DE ES GB GR IT LI LU NL SE

(71) Demandeur: **ATELIERS DE MECANIQUE GENERALE (SOCIETE ANONYME)**
**Zone Industrielle Molina La Chazotte Le Gros Chêne**
**F-42350 La Talaudière  (FR)**

(72) Inventeur: **Deguillaume, René**
**La Sablière**
**F-42350 La Talaudière  (FR)**

(74) Mandataire: **Dupuis, François**
**Cabinet Charras 3 Place de l'Hôtel-de-Ville BP 203**
**F-42005 St. Etienne Cédex 1  (FR)**

(54) **Porte-satellites.**

(57) L'objet de l'invention se rattache au secteur technique des engrenages.

Le porte-satellites selon l'invention est exécuté en deux parties mécaniquement distinctes (1) et (2) dont l'une présente des agencements (1b) conformés pour, d'une part, recevoir des organes d'assemblage rapportés (3) coopérant avec l'autre partie (2) et, d'autre part, permettre le passage et le débordement des satellites (1).

FIG.1

## Description

L'invention concerne un porte-satellites.

L'object de l'invention se rattache au secteur technique des engrenages.

On sait que le planétaire et les satellites d'un train d'engrenages peuvent être montés dans un corps agencé à cet effet et dont une partie peut constituer un moyeu. A ce jour, on a proposé plusieurs moyens de réalisation.

Le corps peut être obtenu directement brut de fonderie. Il est alors nécessaire, dans un deuxième temps, de procéder à un usinage particulier et précis pour le montage du train d'engrenages. Ce coût d'usinage est important.

On a proposé également d'exécuter le corps en trois parties à savoir : un moyeu et un flasque reliés par des éléments entretoises en nombre et selon des dispositions déterminés pour laisser le libre passage aux pignons satellites. Les différentes parties constitutives sont généralement soudées par bombardement électronique, ce qui est coûteux. De plus, il peut apparaître des déformations des parties planes recevant les satellites, ce qui peut entraîner des problèmes au niveau du fonctionnement.

Pour tenter de diminuer les inconvénients précités résultant de la soudure, on a réalisé un corps en deux parties soit un moyeu et un flasque qui forme directement les éléments d'entretoise, pour délimiter les pasages des satellites. Ces deux parties sont ensuite assemblées par soudure. Si le coût de revient est sensiblement diminué du fait de la réduction de soudure, il peut toujours apparaître certaines déformations.

Pour remédier à ces inconvénients, l'invention s'est fixée pour but, d'une manière simple et efficace, de réaliser un corps de satellites en deux parties mécaniquement distinctes dont l'une présente des agencements conformés pour, d'une part, recevoir des organes d'assemblage rapportés coopérant avec l'autre partie et, d'autre part, permettre le passage et le débordement des satellites.

L'invention est exposée ci-après plus en détail à l'aide des dessins qui représentent seulement un mode d'exécution.

La figure 1 est une vue en perspective montrant les différentes parties constitutives du porte-satellites avant assemblage.

La figure 2 est une vue en plan, avec coupe partielle, du porte-satellites.

La figure 3 est une vue en coupe longitudinale du porte-satellites.

Afin de rendre plus concret l'objet de l'invention, on le décrit maintenant d'une manière non limitative en se référant aux exemples de réalisation des figures des dessins.

Selon l'invention, le porte-satellites est exécuté en deux parties mécaniquement distinctes (1) et (2). Chacune des parties est agencée et conformée pour être assemblée au moyen d'organes de fixation rapportés (3) tout en permettant le montage du train d'engrenages à savoir les satellites (4) destinés à engréner avec un planétaire central (non représenté).

La partie (1) forme un flasque circulaire (1a) présentant à partir de son bord périphérique des plots internes (1b) d'appui faisant office d'entretoise et présentant un évidement vertical (1b1) qui laisse subsister une embase (1b2). Ces plots (1b) sont régulièrement répartis sur la circonférence du flasque (1a) en étant décalés angulairement d'une valeur ($\alpha$) déterminée en fonction du nombre de satellites à monter, compte tenu des applications recherchées. Dans l'exemple illustré, les plots (1b) sont décalés angulairement de 120°.

L'embase (1b2) de chacun des plots prend appui sur un disque (2a) que présente la partie (2). Le disque est, d'une manière connue, formé concentriquement à un moyeu (2b) qui généralement reçoit l'arbre moteur du planétaire central. Les embases (1b2) sont percées de part en part d'un trou (1b3) pour le libre engagement des organes d'assemblage (3) coopérant avec des trous correspondants (2a1) formés dans l'épaisseur du disque (2a).

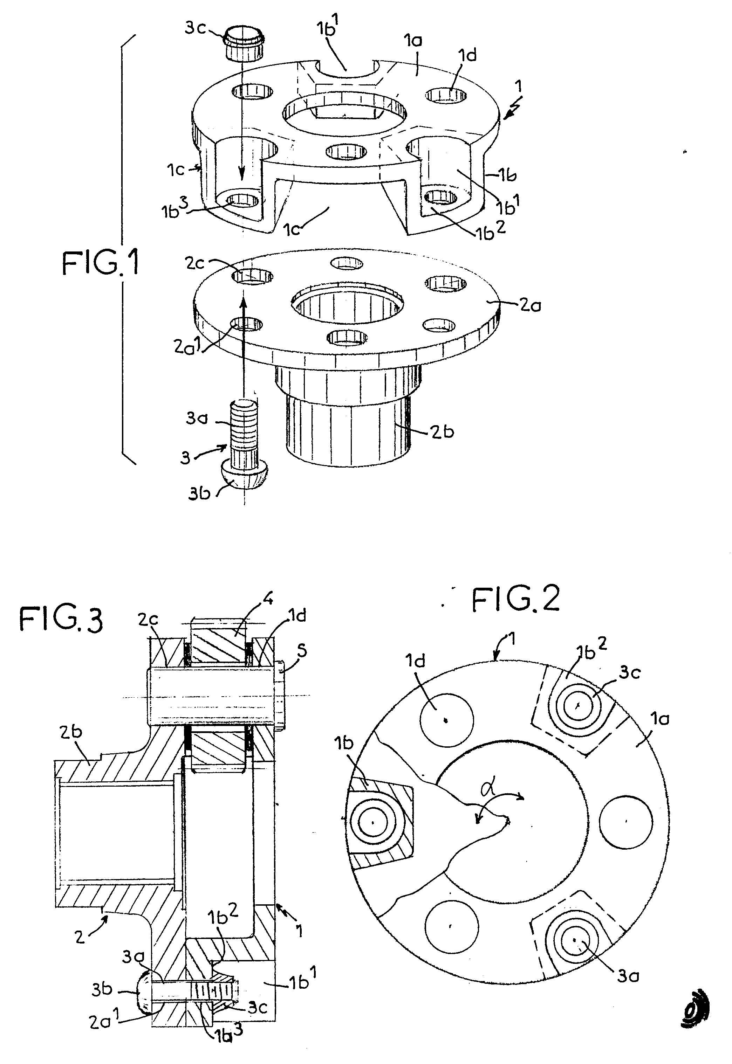

D'une manière avantageuse, les organes d'assemblage (3) sont du type de ceux ayant une grande résistance notamment au cisaillement. Par exemple, ces organes constituent un boulon serti réalisé à partir d'une tige filetée (3a) avec tête (3b) et d'une bague (3c) sertie sur la tige (3a) (figure 3).

Chaque plot (1b) délimite des secteurs libres (1c) pour le passage des satellites (4) qui, d'une manière parfaitement connue, sont montés sur des axes tourillons (5) engagés et maintenus en position dans des trous (1d) et (2c) formés respectivement dans l'épaisseur du flasque circulaire (1a) entre chacun des plots (1b) et, dans l'épaisseur du disque (2a).

Il est bien évident que chacun des parties du porte-satellites selon l'invention, notamment la partie (1), sont agencée en fonction du nombre de pignons-satellites composant le train d'engrenage. Les plots (1b) en plus de leur fonction d'assemblage et d'entretoisement, constituent une nervure interne de raidissement résultant de l'évidement (1b1). Ces plots (1b) sont obtenus directement lors de l'usinage du flasque (1a).

Les avantages ressortent bien de la description, en particulier on souligne:
- la simplicité de réalisation ;
- la réduction du coût de revient ;
- aucune déformation des différentes parties constitutives compte tenu de mode d'assemblage.

## Revendications

-1- Porte-satellites, caractérisé en ce qu'il est exécuté en deux parties mécaniquement distinctes (1) et (2) dont l'une présente des agencements (1b) conformés pour, d'une part, recevoir des organes d'assemblage rapportés (3) coopérant avec l'autre partie (2) et, d'autre part, permettre le passage et le débordement des satellites. (1)

-2- Porte-satellites selon la revendication 1, caractérisé en ce que les agencements (1b) sont des plots d'appui internes formés à partie du bord périphérique d'un flasque circulaire (1a), chaque plot présentant facialement un évidement vertical (1b1) qui laisse subsister une embase (1b2) destinée à coopérer en appui sur un disque (2a) que présente la partie (2).

-3- Porte-satellites selon la revendication 2, caractérisé en ce que les embases (1b2) sont percées de part en part d'un trou pour le libre engagement des organes d'essemblage (3) qui coopèrent en outre avec des trous correspondants (2a1) formés dans l'épaisseur du disque (2a).

-4- Porte-satellites selon la revendication 1, caractérisé en ce que les organes d'assemblage (3) sont réalisés à partir d'une tige filetée (3a) avec tête (3b), et d'une bague (3c) sertie sur la tige (3a).

-5- Porte-satellites selon la revendication 2, caractérisé en ce que les plots (1b) sont régulièrement répartis sur la circonférence du flasque (1a) en étant décalés angulairement d'une valeur (α) déterminée en fonction du nombre de satellites à monter, chaque plot délimitant des secteurs libres (1c) pour le passage desdits satellites.

0271416

FIG.1

FIG.3

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A- 725 364 (ROTARY HOES LTD) * Figure 4 * | 1 | F 16 H 57/08 |
| A | US-A-2 144 937 (RYDER) * En entier * | 1 | |
| A | US-A-4 159 657 (STILLEY) * Résumé * | 1 | |

DOMAINES TECHNIQUES
RECHERCHES (Int. Cl.4)

F 16 H

Le présent rapport a été établi pour toutes les revendications

| Lieu de la recherche | Date d'achèvement de la recherche | Examinateur |
|---|---|---|
| LA HAYE | 23-02-1988 | BEERNAERT J.E. |